# EUROPÄISCHE PATENTSCHRIFT

(11) **EP 2 098 465 B1**
(45) Veröffentlichungstag und Bekanntmachung des Hinweises auf die Patenterteilung: **21.12.2011**
(21) Anmeldenummer: 08405065.7
(22) Anmeldetag: 05.03.2008
(51) Int. Cl.: B65G 61/00

(54) **Annahmestation einer Paketpalettiereinrichtung und Verfahren zum Übergeben von Paketen an einen Greifer mit einer solchen Annahmestation**
Intake station of a packet palletising device and method for transferring packets to a grabber with such an intake station
Station de réception d'un dispositif de palettisation de paquets et procédé de transmission de paquets à un crochet doté d'une telle station de réception

(43) Veröffentlichungstag der Anmeldung: 09.09.2009
(73) Patentinhaber: Müller Martini Holding AG, 6052 Hergiswil (CH)
(72) Erfinder: Ryf, Marc, 5000 Aarau (CH); Liebheit, Stefan, 5603 Staufen (CH)

(56) Entgegenhaltungen:
- EP-A- 0 310 998
- EP-A- 1 801 047
- US-A1- 2007 248 446

## Beschreibung

Die Erfindung betrifft eine Annahmestation einer Paketpalettiereinrichtung, umfassend eine Paketzuführvorrichtung, eine erste und eine zweite Kammer, die von der Paketzuführvorrichtung jeweils Pakete aufnehmen können, erste, der ersten Kammer und zweite, der zweiten Kammer zugeordnete Fördermittel, mit denen Pakete in den Kammern transportiert und einem Paketgreifer übergebbar sind sowie erste Zentriermittel zum Zentrieren der Pakete in der ersten Kammer und zweite Zentriermittel zum Zentrieren der Pakete in der zweiten Kammer.

Eine Annahmestation dieser Art ist im Stand der Technik durch EP-A-1 801 047 bekannt geworden. Diese ist hier als Übergabeeinheit bezeichnet und besitzt eine Verschiebeeinheit, auf der ein Schlitten horizontal und quer zur Transportrichtung verschiebbar angeordnet ist. Auf dem Schlitten sind zwei nebeneinander angeordnete Ablagemittel für jeweils einen Stapel vorgesehen. Diese Ablagemittel werden jeweils durch Förderbänder gebildet. Mit einem Stapelgreifer werden jeweils zwei auf den Ablagemitteln der Annahmestation bzw. der Übergabeeinheit befindliche Pakete übernommen und auf einer Palette abgelegt. Für die Verarbeitung von vergleichsweise breiten Paketen muss die Annahmestation entsprechend breit ausgebildet sein, was aus Platzgründen und auch im Hinblick auf die Herstellungskosten jedoch nachteilig ist. Eine Anpassung an unterschiedliche Formate ist somit nur mit einer vergleichsweise breiten Annahmestation möglich.

Der Erfindung liegt die Aufgabe zugrunde, eine Annahmestation der genannten Art zu schaffen, mit der sehr unterschiedlich breite Pakete einem Paketgreifer übergeben werden können und die trotzdem vergleichsweise schmal gebaut werden kann. Die Aufgabe ist gemäss Anspruch 1 dadurch gelöst, dass zwischen den ersten und den zweiten Fördermitteln dritte Fördermittel angeordnet sind und dass die ersten und zweiten Zentriermittel relativ zueinander so verstellbar sind, dass sich die dritten Fördermittel in der ersten oder zweiten Kammer befinden und die Kammer mit den dritten Fördermitteln wesentlich breiter ist als die andere Kammer.

Bei der erfindungsgemässen Annahmestation ist wahlweise eine Doppelannahme oder Einzelannahme von Paketen möglich. Bei einer Doppelannahme werden parallel zueinander und zeitlich nacheinander zwei Pakete mit vergleichsweise geringer Breite angenommen und dem Greifer gleichzeitig übergeben. Bei der Einzelannahme wird jeweils lediglich ein Paket mit einer vergleichsweise grossen Breite angenommen und an den Greifer übergeben. Der Greifer palettiert dann entsprechend lediglich dieses vergleichsweise breite Paket. Bei der Einzelannahme werden die Pakete jeweils von den ersten oder den zweiten und den dritten Fördermitteln transportiert. Bei der Doppelannahme erfolgt vorzugsweise der Transport in der ersten Kammer mit den ersten Fördermitteln und in der zweiten Kammer mit den zweiten Fördermitteln. Die dritten Fördermittel sind hierbei vorzugsweise nicht aktiv. Die Annahmestation ermöglicht somit die Verarbeitung von vergleichsweise schmalen und auch von wesentlich breiteren Paketen und hat somit den Vorteil, dass sie bezüglich der Paketformate sehr variabel ist.

Nach einer Weiterbildung der Erfindung ist vorgesehen, dass die ersten und zweiten Zentriermittel jeweils zwei im Abstand zueinander angeordnete Zentrierorgane aufweisen, welche an einem oberen oder an einem unteren Ende quer zur Transportrichtung der Fördermittel verstellbar geführt sind. Durch Verstellen dieser Zentrierorgane, die vorzugsweise als Zentrierplatten ausgebildet sind, können sehr unterschiedlich breite Kammern gebildet werden. Insbesondere ist auch eine asymmetrische Anordnung möglich. Für eine Doppelannahme können die beiden Kammern beispielsweise durch Verstellen der Zentrierorgane auf eine Breite im Bereich von beispielsweise 100 mm bis 300 mm eingestellt werden. Für eine Einzelannahme ist eine Kammer beispielsweise mit einer Breite von 100 mm bis 500 mm möglich. Vorzugsweise werden die Zentrierorgane bzw. Zentrierplatten motorisch, beispielsweise mittels einer Spindel verstellt.

Nach einer Weiterbildung der Erfindung ist vorgesehen, dass die beiden Kammern und die Fördermittel sowie die Zentriermittel auf einem quer zur Transportrichtung verfahrbaren Tisch angeordnet sind, so dass die Pakete mit der Paketzuführvorrichtung der ersten und der zweiten Kammer zugeführt werden. Bei einer Doppelannahme wird somit beispielsweise ein erstes Paket der ersten Kammer zugeführt und anschliessend wird der Tisch verfahren, so dass ein zweites Paket der zweiten Kammer zuführbar ist. Bei einer Einzelannahme wird der Tisch so bewegt, dass das entsprechend breite Paket der dafür vorgesehenen Kammer zugeführt wird.

Nach einer Weiterbildung der Erfindung ist vorgesehen, dass die Zentriermittel unabhängig voneinander verstellbar sind. Damit ist ohne Werkzeugeinsatz ein sehr einfaches und schnelles Umrüsten zwischen einer Einzelannahme und Doppelannahme möglich. Vorzugsweise sind die Zentriermittel jeweils an einem oberen Ende verstellbar an horizontal sich erstreckenden Führungsstangen gelagert.

Nach einer Weiterbildung der Erfindung weisen die Fördermittel jeweils Rollen auf. Auf diesen können die Pakete besonders einfach und sicher gefördert und zentriert werden. Vorzugsweise ist hierbei vorgesehen, dass die Zentriermittel jeweils an einem unteren Ende eine Kontur aufweisen, welche korrespondierend zur Kontur der Rollen ausgebildet ist. Die Zentriermittel greifen hierbei zwischen die Rollen ein und ermöglichen ein besonders sicheres Zentrieren der Pakete.

Die Erfindung betrifft zudem ein Verfahren zum Übergeben von Paketen an einen Paketgreifer mit einer Annahmestation gemäß Anspruchs 8.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: schematisch eine räumliche Ansicht einer Paketpalettiereinrichtung mit einer erfindungsgemässen Annahmestation,
- Figur 2: eine räumliche Ansicht der Annahmestation,
- Figur 3: eine weitere räumliche Ansicht der erfindungsgemässen Annahme- station,
- Fig. 4 bis 7: jeweils eine Draufsicht auf die erfndungsgemässe Annahmestation, wobei diese jeweils in unterschiedlichen Phasen bei der Umstellung auf eine Einzelannahme gezeigt sind,
- Figur 8: eine räumliche Ansicht der erfindungsgemässen Annahmestation, wo- bei diese für eine Einzelannahme eingerichtet ist,
- Figur 9: eine Seitenansicht eines Paketgreifers und
- Figur 10: eine räumliche Ansicht einer Palette mit palettierten Paketen.

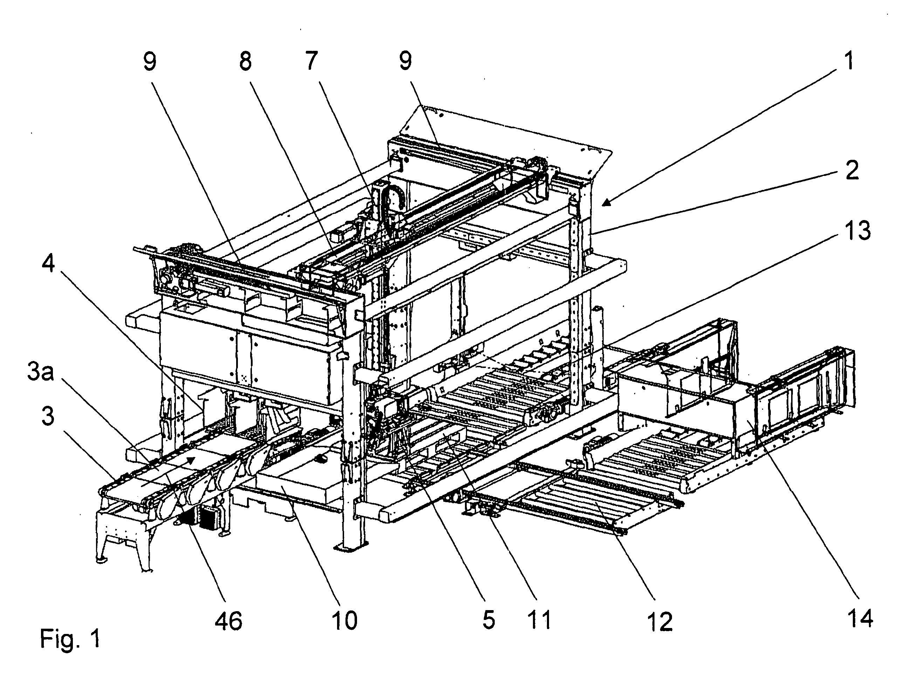

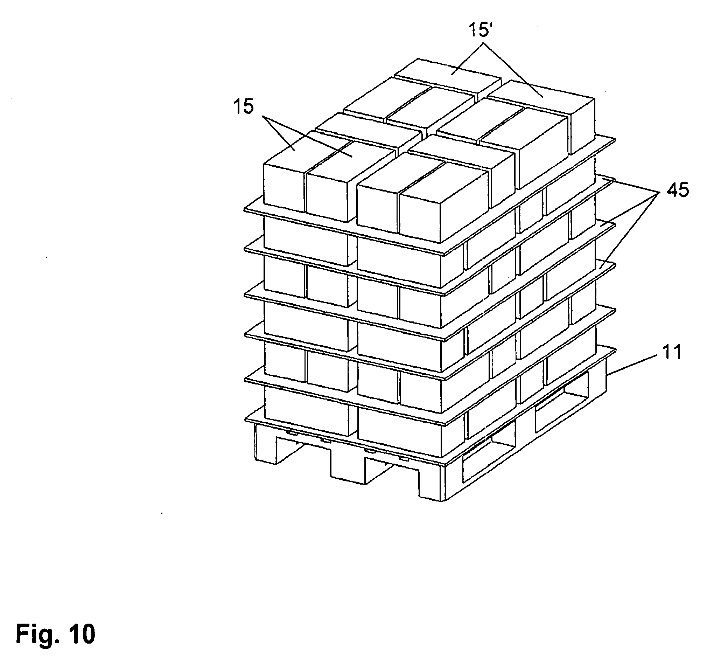

Mit der in Figur 1 gezeigten Palettiereinrichtung 1 kann gemäss Figur 10 eine Palette 11 mit Paketen 15 und 15' palettiert werden. Zwischen den Paketen 15 und 15' sind in bekannter Weise so genannte Zwischenpappen 45 angeordnet. Das Palettieren erfolgt selbsttätig und wird so gesteuert, dass die Pakete 15 und 15' jeweils optimal und exakt auf die Palette 11 abgelegt werden. Ebenfalls werden die Zwischenpappen 45 selbsttätig abgelegt. Die Pakete 15 und 15' sind an sich beliebige Stapel, vorzugsweise aus Druckprodukten, beispielsweise Druckbogen, Zeitungen, Bücher und dergleichen. Die Pakete 15 und 15' können foliert oder sonst wie gebunden sein, was aber nicht zwingend ist. Die Pakete 15 und 15' können auch aus Einzeldruckprodukten, beispielsweise aus dicken Katalogen bestehen.

Die Palettiereinrichtung 1 besitzt ein Maschinengestell 2, vor dem gemäss Figur 1 eine Paketzuführvorrichtung 3 angeordnet ist. Diese dient zum Zuführen der Pakete 15 und 15' zu einer Paketannahmestation 4, die innerhalb des Gestells 2 angeordnet ist. Die Pakete 15 und 15' werden in einer Reihe hintereinander gefördert, wobei hierzu die Paketzuführvorrichtung 3 beispielsweise mit einem Transportband 3a versehen ist. In Figur 1 zeigt der Pfeil 46 die Richtung, in welcher die Pakete 15 und 15' der Paketannahmestation 4 zugeführt werden. Die Paketzuführvorrichtung 3 kann grundsätzlich beliebig ausgebildet sein.

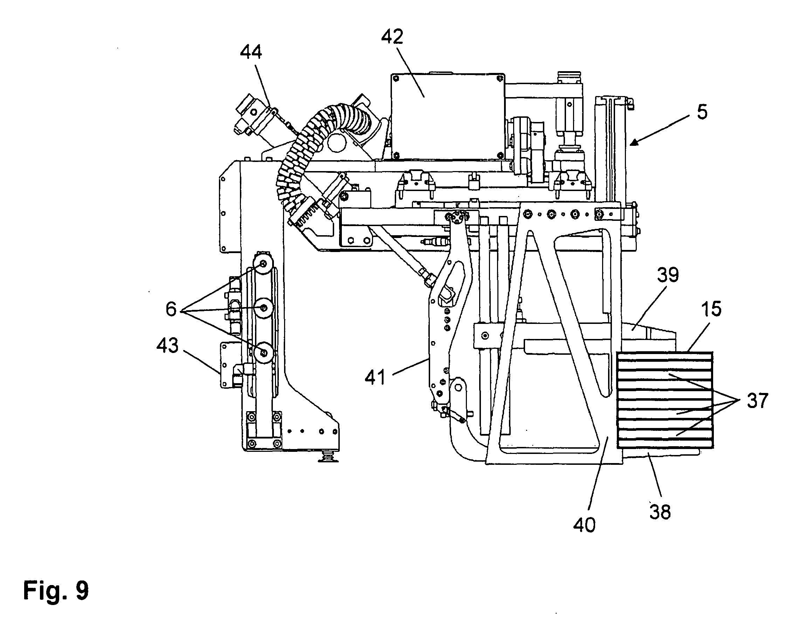

Weiter weist die Palettiereinrichtung 1 einen näher in Figur 9 gezeigten Paketgreifer 5 auf. Mit diesem können die Pakete 15 der Paketannahmestation 4 entnommen und auf die Palette 11 abgelegt werden. Der Paketgreifer 5 besitzt zum Greifen wenigstens eines Paketes 15 einen Finger 38 und einen Stempel 39 sowie ein Anschlagelement 40, an dem das Paket 15 positionierbar ist. Der Finger 38 ist an einem Arm 41 angeordnet, der mittels eines Stellzylinders 44 bewegbar ist. Das Paket 15 besteht hier aus einer Mehrzahl von Druckprodukten 37. Weiter besitzt der Paketgreifer 5 einen Zwischenpappengreifer 43 mit Saugern 6, mit dem Zwischenpappen 45 einem Zwischenpappenmagazin 10 entnommen und auf die Palette 11 abgelegt werden können. Zur Steuerung der einzelnen Bewegungen besitzt der Paketgreifer 5 eine geeignete Steuerung 42. Der Paketgreifer 5 kann in sämtlichen Raumrichtungen und entlang einer vertikalen Säule 7 bewegt werden. Die Säule 7 ist an einer Brücke 8 gelagert, die auf zwei im Abstand zueinander angeordneten horizontalen Querträgern 9 verfahrbar ist (Fig. 1).

Schliesslich weist die Palettiereinrichtung 1 eine Palettenzuführvorrichtung 12 sowie ein Palettenmagazin 14 auf. Mit an sich bekannten Mitteln können die Paletten 11 jeweils dem Palettenmagazin 14 entnommen und zum Palettieren bereitgestellt werden. Sind die Paletten 11 mit Paketen 15 und 15' palettiert, so können diese mittels eines Auslaufförderers 13 wegtransportiert.und beispielsweise auf ein Fahrzeug verladen werden. Die Palette 11 kann auch lediglich mit Paketen 15 oder lediglich mit Paketen 15' beladen werden.

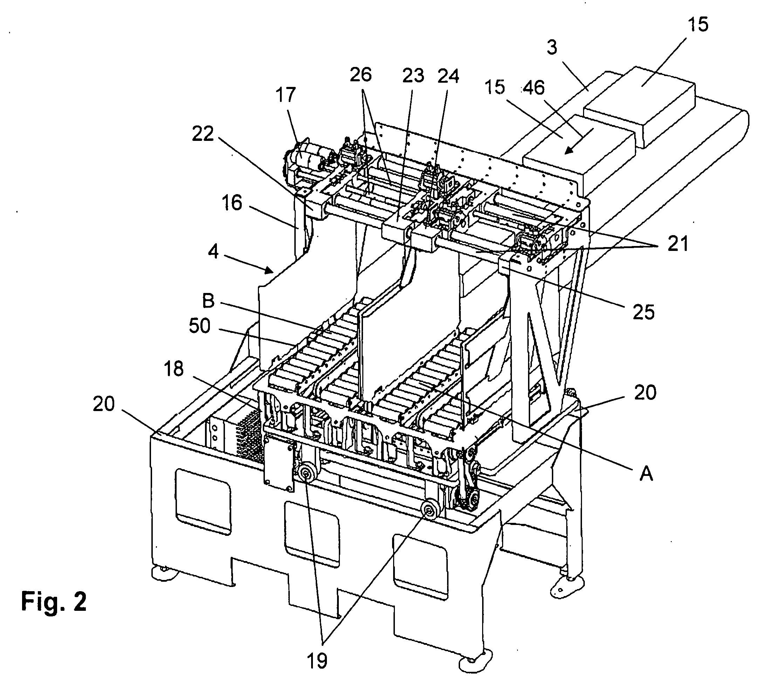

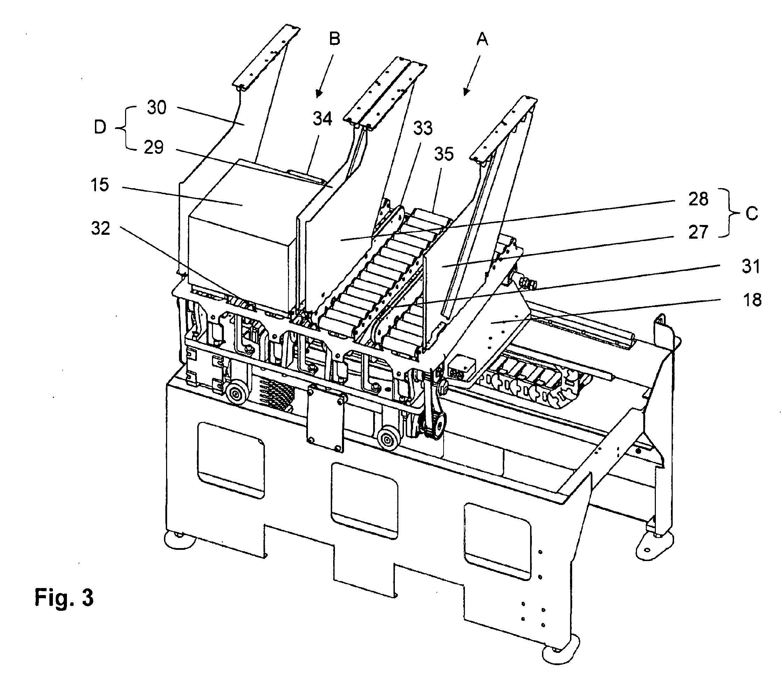

Die Paketannahmestation 4 besitzt gemäss Figur 2 einen Tisch 18, der mittels Rollen 19 auf zwei parallel zueinander verlaufenden Laufbahnen 20 angeordnet ist. Auf dem Tisch 18 sind gemäss Figur 3 erste Fördermittel 31, zweite Fördermittel 32 sowie dritte Fördermittel 33 angeordnet. Diese Fördermittel 31-33 sind beispielsweise Endlosförderer, beispielsweise mit einem Band oder einer Kette, welche Mitnehmer aufweist. Die Fördermittel 31-33 können jeweils auch mehr als ein Förderorgan, beispielsweise zwei oder mehr als zwei endlose Förderbänder oder Förderketten aufweisen.

Der Tisch 18 und damit die Paketannahmestation 4 sind quer zur Transportrichtung der Fördermittel 31-33 verfahrbar angeordnet. Das Verfahren des Tisches 18 erfolgt gesteuert mit einem hier nicht gezeigten Antrieb. Der Tisch 18 kann dabei so verstellt werden, dass die Pakete 15 wahlweise einer ersten Kammer A oder einer zweiten Kammer B der Paketannahmestation 4 zugeführt werden. In der Figur 2 ist der Tisch 18 so positioniert, dass die Pakete 15 der zweiten Kammer B zugeführt werden. Wird der Tisch 18 in Figur 2 nach links verschoben, so ist eine Anordnung möglich, bei welcher die Pakete 15 der ersten Kammer A zugeführt werden.

Als Auflage sind auf dem Tisch 18 zudem Rollen 34 und 35 angeordnet. Diese erstrecken sich jeweils quer zur Transportrichtung und ermöglichen ein sehr gleitungsfreies Fördern der Pakete 15 bzw. 15'. In der Figur 3 befindet sich ein Paket 15 in der Kammer B. Wie ersichtlich, liegt das Paket 15 auf den Rollen 34 auf. Das zweite Fördermittel 32 ist mit dem Paket 15 in Eingriff und kann dieses entsprechend fördern. Ein gleiches oder ähnliches Paket 15 kann entsprechend in der Kammer A gefördert werden. Zur Unterstützung des Pakettransports können die Rollen 34 und 35 auch angetrieben ausgebildet sein.

Die erste Kammer A wird seitlich durch ein erstes Zentriermittel C begrenzt, welches ein erstens Zentrierorgan 27 und ein zweites Zentrierorgan 28 aufweist. Die zweite Kammer B wird seitlich durch ein zweites Zentriermittel D begrenzt, welches durch ein drittes Zentrierorgan 29 und ein viertes Zentrierorgan 30 gebildet wird. Diese Zentrierorgane 27-30 erstrecken sich vertikal und parallel zueinander. Sie sind beispielsweise plattenförmig ausgebildet. Die Zentrierorgane 27-30 sind jeweils an einem oberen Ende mit Trägern 22-25 verstellbar an Führungsstangen 21 oder anderen geeigneten Führungsmitteln gelagert (Fig. 2). Diese Führungsstangen 21 sind an einer Tragvorrichtung 16 befestigt, welche auf dem Tisch 18 befestigt ist und sich nach oben erstreckt. Die Zentrierorgane 27-30 dienen zum Zentrieren der Pakete 15 bzw. 15' während des Transports in der Kammer A bzw. B. Hierzu können die Zentrierorgane 27-30 relativ zueinander und quer zur Transportrichtung verstellt werden. Das Verstellen erfolgt vorzugsweise selbsttätig mit einem Antrieb 17 und Spindeln 26, welche mit den Trägern 22-25 in Eingriff sind. Vorzugsweise sind die Zentrierorgane 27-30 unabhängig voneinander verstellbar. Das Verstellen erfolgt über eine geeignete Steuervorrichtung. Die Zentrierorgane 27-30 erstrecken sich jeweils nach unten bis zu den Rollen 34 bzw. 35. Vorzugsweise besitzen sie jeweils an einem unteren Rand eine Profilierung 50, welche korrespondierend zu den Rollen 34 bzw. 35 so ausgebildet ist, dass die Zentrierorgane 27-30 über die Rollen verschiebbar sind, hierbei jedoch möglichst wenig Zwischenraum verbleibt. Damit kann sichergestellt werden, dass die Pakete 15 bzw. 15' sich nicht zwischen einem Zentrierorgan 27-30 und den Rollen 34 bzw. 35 verklemmen können.

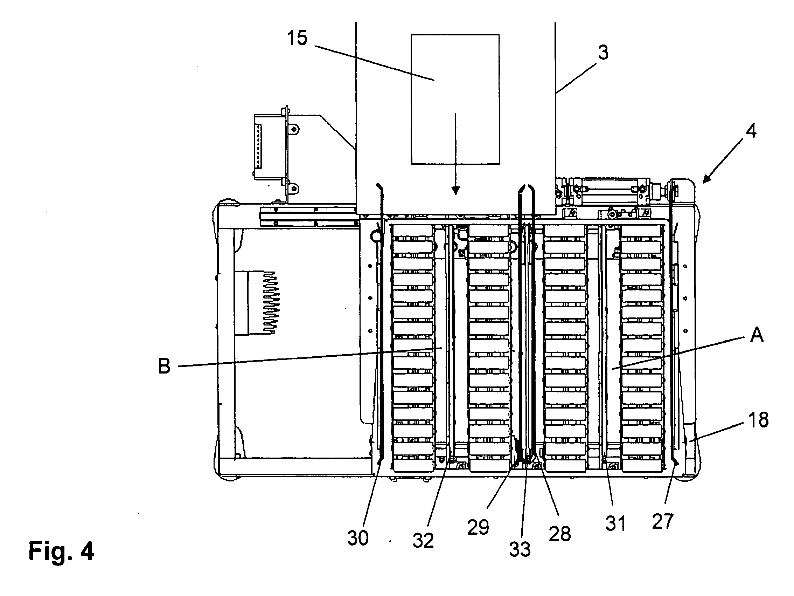

Die Zentrierorgane 27-30 sind so verstellbar, dass Pakete 15 bzw. 15' in einem Doppelannahmemodus oder in einem Einzelannahmemodus an den Paketgreifer 5 übergeben werden können. Dies wird nachfolgend anhand der Figuren 4 bis 8 näher erläutert.

Die Paketannahmestation 4 ist in der Anordnung gemäss Figur 4 für eine Doppelannahme eingerichtet. Die beiden Kammern A und B sind im Wesentlichen gleich ausgebildet. Der Tisch 18 ist so positioniert, dass mit der Paketzuführvorrichtung 3 jeweils ein Paket 15 der Kammer B zugeführt werden kann. Befindet sich ein Paket 15 in der Kammer B, so wird der Tisch 18 in der Figur 4 nach links verschoben, so dass ein weiteres Paket 15 der ersten Kammer A zugeführt werden kann. Mit den ersten Fördermitteln 31 und den zweiten Fördermitteln 32 können die beiden Pakete 15 gefördert und dem Paketgreifer 5 übergeben werden.

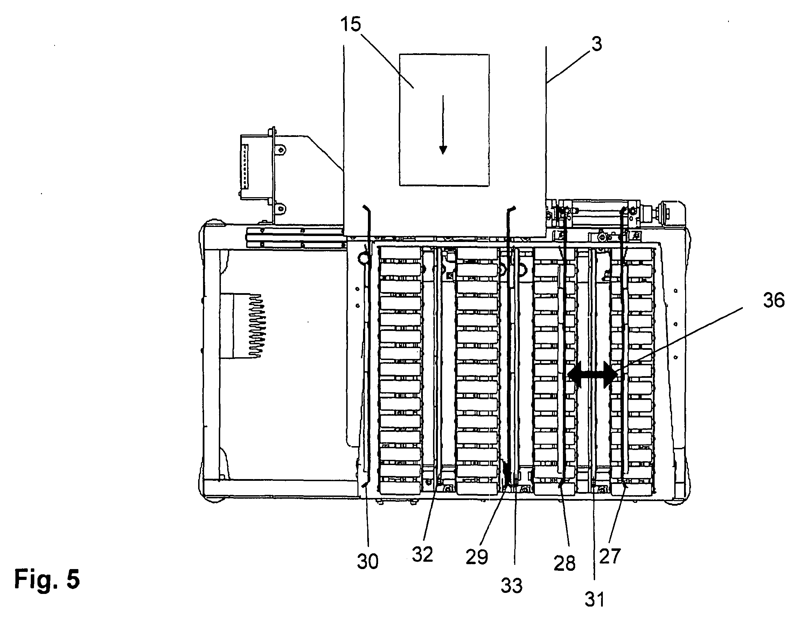

Die Figuren 5 bis 7 zeigen das Umstellen der Paketannahmestation 4 für eine Einzelannahme. Die einzelnen Schritte können selbsttätig gesteuert vorgenommen werden.

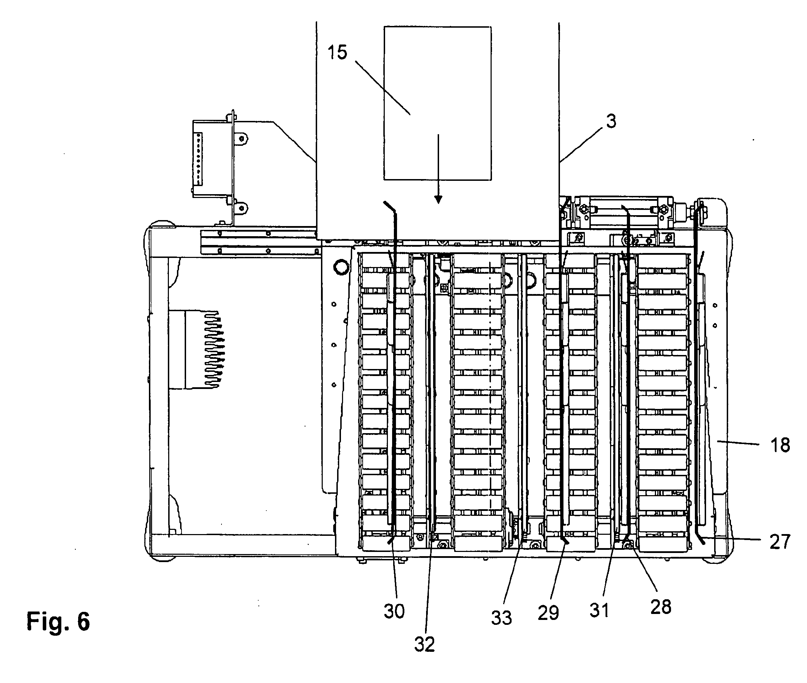

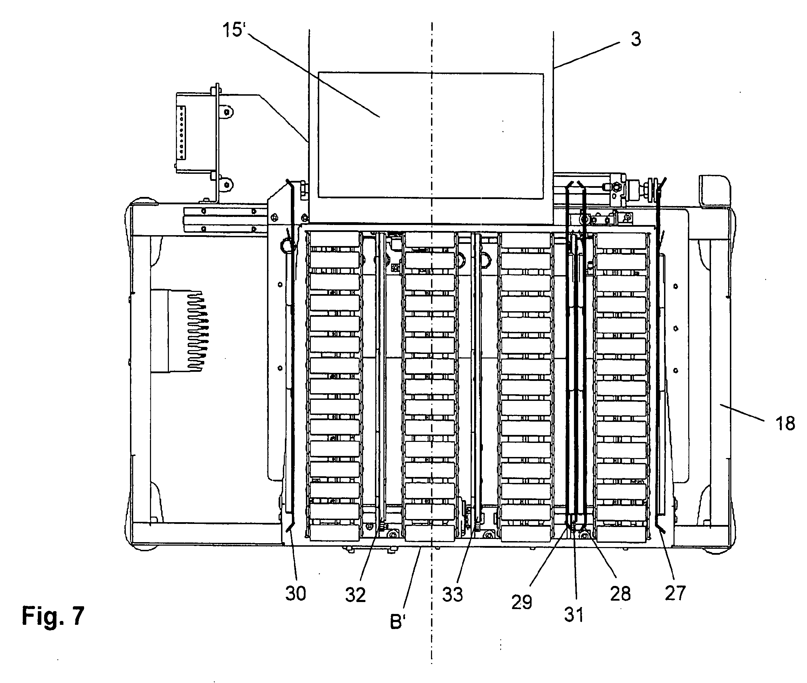

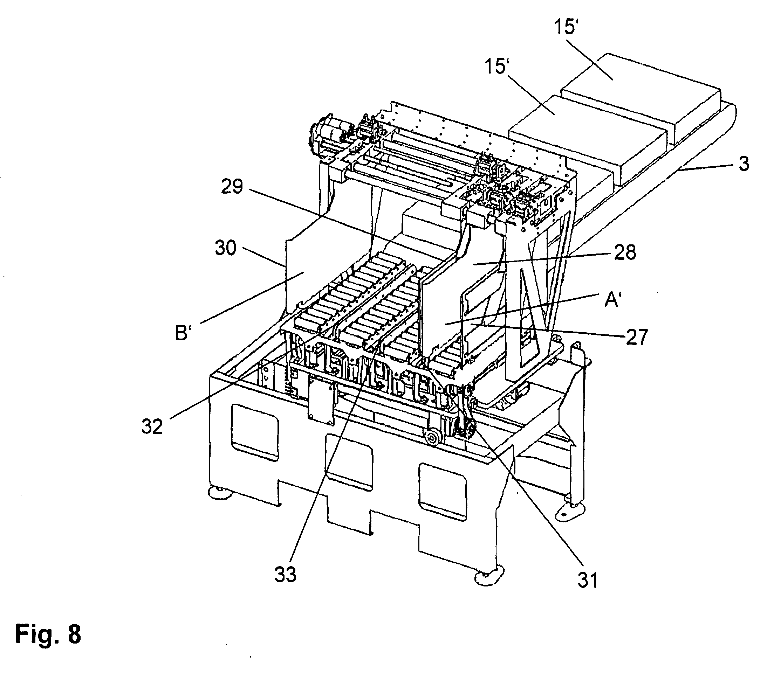

Zunächst werden die beiden Zentrierorgane 27 und 28 in die in Figur 5 gezeigte Position verschoben. Diese Verschiebungen sind mit dem Doppelpfeil 36 angedeutet. Der Abstand zwischen dem ersten Zentrierorgan 27 und dem zweiten Zentrierorgan 28 wird somit verkleinert. Nun werden auch das dritte Zentrierorgan 29 und das vierte Zentrierorgan 30 in der Figur 5 nach rechts in die in Figur 6 gezeigten Positionen verstellt. Das dritte Zentrierorgan 29 ist somit wie ersichtlich im Abstand zum dritten Fördermittel 33 angeordnet. In einem weiteren Schritt wird der Abstand zwischen dem dritten Zentrierorgan 29 und dem vierten Zentrierorgan 30 durch entsprechendes Verschieben dieser beiden Organe in die in Figur 7 gezeigten Positionen noch weiter vergrössert. Schliesslich wird der Tisch 18 in die in Figur 7 gezeigte Stellung verschoben, wodurch eine vergleichsweise breite, zweite Kammer B' entsteht, die bezüglich der Paketzuführvorrichtung 3 wie gezeigt zentriert ist. Innerhalb der Kammer B' sind die beiden Fördermittel 32 und 33 angeordnet. In der Kammer B' kann ein vergleichsweise breites Paket 15' gefördert werden. Dabei wird das Paket 15' gleichzeitig vom zweiten Fördermittel 32 und vom dritten Fördermittel 33 transportiert sowie seitlich vom dritten Zentrierorgan 29 und vom vierten Zentrierorgan 30 geführt. Das Paket 15' kann im Wesentlichen etwa doppelt so breit sein wie ein Paket 15. Vom Paketgreifer 5 wird das Paket 15' allein ergriffen und auf die Palette 11 abgelegt. Selbstverständlich können in der Kammer B' nacheinander eine Vielzahl von Paketen 15' transportiert und an den Paketgreifer 5 abgegeben werden. Währenddessen sind die ersten Fördermittel 31 vorzugsweise inaktiv und die vergleichsweise schmale, erste Kammer A' wird nicht benutzt (Fig. 8).

Ist eine Doppelannahme erforderlich, so werden die Zentrierorgane 27-30 wieder durch entsprechende Verstellungen in die in Figur 4 gezeigten Positionen gebracht. Auch diese Umstellung kann selbsttätig gesteuert erfolgen.

## Patentansprüche

1. Annahmestation einer Palettiereinrichtung, umfassend:
eine Paketzuführvorrichtung (3),
eine erste und eine zweite Kammer (A, B), die von der Paketzuführvorrichtung (3) jeweils Pakete (15, 15') aufnehmen können,
erste, der ersten Kammer (A) und zweite, der zweiten Kammer (B) zugeordnete Fördermittel (31, 32), mit denen die Pakete (15, 15') in den Kammern (A, B) transportiert und einem Paketgreifer (5) übergebbar sind,
erste Zentriermittel (C) zum Zentrieren der Pakete (15, 15') in der ersten Kammer (A) und zweite Zentriermittel (D) zum Zentrieren der Pakete (15, 15') in der zweiten Kammer (B),
**dadurch gekennzeichnet,**
**dass** zwischen den ersten und den zweiten Fördermitteln (31, 32) dritte Fördermittel (33) angeordnet sind und dass die ersten und zweiten Zentriermittel (C, D) relativ zueinander so verstellbar sind, dass die dritten Fördermittel (33) sich in der ersten oder zweiten Kammer (A, B) befinden und die Kammer mit den dritten Fördermitteln (33) wesentlich breiter ist als die andere Kammer.

2. Annahmestation nach Anspruch 1, **dadurch gekennzeichnet, dass** die ersten und die zweiten Zentriermittel (C, D) jeweils zwei im Abstand zueinander angeordnete Zentrierorgane (27-30) aufweisen, welche an einem oberen oder an einem unteren Ende quer zur Transportrichtung der Fördermittel (31-33) verstellbar geführt sind.

3. Annahmestation nach Anspruch 1 oder 2, **dadurch gekennzeichnet, dass** die beiden Kammern (A, B) und die Fördermittel (31-33) sowie die Zentriermittel (C, D) auf einem quer zur Transportrichtung verfahrbaren Tisch (18) angeordnet sind.

4. Annahmestation nach einem der Ansprüche 1 bis 3, **dadurch gekennzeichnet, dass** die Zentriermittel (C, D) unabhängig voneinander verstellbar sind.

5. Annahmestation nach Anspruch 4, **dadurch gekennzeichnet, dass** die Zentriermittel (C, D) jeweils an einem oberen Ende verstellbar an sich horizontal erstreckenden Führungsstangen (21) gelagert sind.

6. Annahmestation nach einem der Ansprüche 1 bis 5, **dadurch gekennzeichnet, dass** die Pakete (15, 15') in den Kammern (A, B) jeweils auf Rollen (34, 35) gefördert werden.

7. Annahmestation nach Anspruch 6, **dadurch gekennzeichnet, dass** die Zentriermittel (C, D) jeweils an einem unteren Ende eine an die Rollen (34, 35) angepasste Kontur (50) aufweisen.

8. Verfahren zum Übergeben von Paketen an einen Paketgreifer mit einer Annahmestation gemäss einem der Ansprüche 1 bis 7, **dadurch gekennzeichnet, dass** die Zentriermittel (C, D) entsprechend dem Format der an den Paketgreifer (5) zu übergebenden Pakete (15, 15') so verstellt werden, dass für eine Doppelannahme in beiden Kammern (A, B) oder für eine Einzelannahme lediglich in einer der beiden Kammern (A, B) Pakete (15, 15') gefördert und an den Paketgreifer (5) übergeben werden.

9. Verfahren nach Anspruch 8, **dadurch gekennzeichnet, dass** die Pakete (15, 15') in den Kammern (A, B) jeweils auf Rollen (34, 35) gefördert werden.

10. Verfahren nach Anspruch 8 oder 9, **dadurch gekennzeichnet, dass** im Fall einer Einzelannahme die Pakete (15') in der jeweiligen Kammer (A, B) von wenigstens zwei im Abstand zueinander angeordneten Fördermitteln (31, 33; 32, 33) transportiert werden.

## Claims

1. Intake station of a palletising device, comprising:
a packet feed device (3),
a first and second chamber (A, B), which may take packets (15, 15') from the packet feed device (3),
a first means of conveying (31, 32) allocated to the first chamber (A) and a second means of conveying (31, 32) allocated to the second chamber (B), with which the packets (15, 15') are transported in the chambers (A, B) and may be transferred to a packet grabber (5),
a first means of centring (C) for centring the packets (15, 15') in the first chamber (A) and a second means of centring (D) for centring the packets (15, 15') in the second chamber (B),
**characterised in that**
between the first and second means of conveying (31, 32) a third means of conveying (33) is arranged and the first and second means of centring (C, D) may be adjusted in relation to each other so that the third means of conveying (33) is in the first or second chamber (A, B) and the chamber with the third means of conveying (33) is considerably wider than the other chambers.

2. Intake station according to claim 1, **characterised in that** the first and second means of centring (C, D) each have centring devices (27 - 30) arranged at a distance from each other, which at the top or bottom end are guided so that they may be adjusted crosswise to the direction of transport of the means of conveying (31 - 33).

3. Intake station according to claim 1 or 2, **characterised in that** both chambers (A, B) and the means of conveying (31 - 33) as well as the means of centring (C, D) are arranged on a table (18), which may be moved crosswise to the direction of transport.

4. Intake station according to one of claims 1 to 3, **characterised in that** the means of centring (C, D) may be adjusted independently of each other.

5. Intake station according to claim 4, **characterised in that** the means of centring (C, D) are each supported at the top end on horizontally extending guide rods (21) so that they may be adjusted.

6. Intake station according to one of claims 1 to 5, **characterised in that** the packets (15, 15') are conveyed in the chambers (A, B) on rollers (34, 35).

7. Intake station according to claim 6, **characterised in that** at the bottom end the means of centring (C, D) each have a contour (50) adapted to the rollers (34, 35).

8. Method for transferring packets to a packet grabber with an intake station according to one of claims 1 to 7, **characterised in that** the means of centring (C, D) according to the size of the packets (15, 15') to be transferred to the packet grabber (5) may be adjusted so that packets (15, 15') are conveyed for double intake in both chambers (A, B) or single intake in only one of the two chambers (A, B) and are transferred to the packet grabber (5).

9. Method according to claim 8, **characterised in that** the packets (15, 15') are conveyed in the chambers (A, B) on rollers (34, 35).

10. Method according to claim 8 or 9, **characterised in that** in the case of single intake the packets (15, 15') are transported in the relevant chamber (A, B) by at least two means of conveying (31, 33; 32,33) arranged at a distance from each other.

## Revendications

1. Poste de réception d'un système de palettisation, comprenant :
un dispositif (3) d'amenée de colis,
des premier et second compartiments (A, B), aptes à recevoir des colis (15, 15') en provenance respective dudit dispositif d'amenée (3),
des premiers et deuxièmes moyens de convoyage (31, 32) respectivement affectés audit premier compartiment (A) et audit second compartiment (B), et par lesquels les colis (15, 15') sont transportés dans les compartiments (A, B) et peuvent être transférés à un élément (5) de saisie desdits colis,
des premiers moyens de centrage (C) conçus pour centrer les colis (15, 15') dans le premier compartiment (A), et des seconds moyens de centrage (D) conçus pour centrer lesdits colis (15, 15') dans le second compartiment (B),
**caractérisé par le fait**
**que** des troisièmes moyens de convoyage (33) sont interposés entre les premiers et
deuxièmes moyens de convoyage (31, 32) ; et par le fait que les premiers et seconds moyens de centrage (C, D) peuvent être mutuellement réglés de façon telle que les troisièmes moyens de convoyage (33) se trouvent dans le premier ou le second compartiment (A, B), et que le compartiment présentant lesdits troisièmes moyens de convoyage (33) soit notablement plus large que l'autre compartiment.

2. Poste de réception selon la revendication 1, **caractérisé par le fait que** les premiers et les seconds moyens de centrage (C, D) sont respectivement pourvus de deux organes de centrage (27-30) placés à distance l'un de l'autre et guidés avec faculté de réglage, à une extrémité supérieure ou inférieure, transversalement vis-à-vis de la direction de transport des moyens de convoyage (31-33).

3. Poste de réception selon la revendication 1 ou 2, **caractérisé par le fait que** les deux compartiments (A, B) et les moyens de convoyage (31-33), ainsi que les moyens de centrage (C, D), sont disposés sur un plateau (18) déplaçable transversalement vis-à-vis de la direction de transport.

4. Poste de réception selon l'une des revendications 1 à 3, **caractérisé par le fait que** les moyens de centrage (C, D) sont réglables indépendamment les uns des autres.

5. Poste de réception selon la revendication 4, **caractérisé par le fait que** les moyens de centrage (C, D) sont respectivement montés avec faculté de réglage, à une extrémité supérieure, sur des barres de guidage (21) s'étendant horizontalement.

6. Poste de réception selon l'une des revendications 1 à 5, **caractérisé par le fait que** les colis (15, 15') sont respectivement convoyés sur des rouleaux (34, 35) dans les compartiments (A, B).

7. Poste de réception selon la revendication 6, **caractérisé par le fait que** les moyens de centrage (C, D) sont respectivement dotés, à une extrémité inférieure, d'un profil (50) adapté aux rouleaux (34, 35).

8. Procédé de transfert de colis à un élément de saisie desdits colis, à l'aide d'un poste de réception conforme à l'une des revendications 1 à 7, **caractérisé par le fait que** les moyens de centrage (C, D) sont réglés en concordance avec le format des colis (15, 15') devant être transférés à l'élément (5) de saisie desdits colis, de façon telle que des colis (15, 15') soient convoyés et transférés audit élément de saisie (5) en vue d'une réception double dans les deux compartiments (A, B), ou d'une réception individuelle dans l'un seulement des deux compartiments (A, B).

9. Procédé selon la revendication 8, **caractérisé par le fait que** les colis (15, 15') sont respectivement convoyés sur des rouleaux (34, 35) dans les compartiments (A, B).

10. Procédé selon la revendication 8 ou 9, **caractérisé par le fait que**, dans le cas d'une réception individuelle, les colis (15') sont transportés, dans le compartiment (A, B) considéré, par au moins deux moyens de convoyage (31, 33 ; 32, 33) placés à distance l'un de l'autre.
